# FASCICULE DE BREVET EUROPEEN

(11) **EP 4 455 920 B1**
(45) Date de publication et mention de la délivrance du brevet: **20.08.2025**
(21) Numéro de dépôt: 24169767.1
(22) Date de dépôt: 11.04.2024
(51) Int. Cl.: G06F 21/57, H04L 9/16, H04L 9/40, H04W 4/10, H04W 12/02

(54) **PROCÉDÉ DE CHIFFREMENT D'UNE INFORMATION TRANSMISE AU SEIN D'UN RÉSEAU DE COMMUNICATION**
VERFAHREN ZUM VERSCHLÜSSELN EINER INNERHALB EINES KOMMUNIKATIONSNETZES ÜBERTRAGENEN INFORMATION
METHOD FOR ENCRYPTING INFORMATION TRANSMITTED WITHIN A COMMUNICATION NETWORK

(30) Priorité: 27.04.2023 FR 2304270
(43) Date de publication de la demande: 30.10.2024
(73) Titulaire: Airbus DS SLC, 78990 Elancourt (FR)
(72) Inventeur: MOUFFRON, Marc, 78470 Saint Rémy les Chevreuses (FR); GAUTHIER, Sandrine, 92120 Montrouge (FR)
(74) Mandataire: Cabinet Camus Lebkiri

(56) Documents cités:
- EP-A1- 2 665 224
- US-A9- 2007 271 470

## Description

### DOMAINE TECHNIQUE DE L'INVENTION

Le domaine technique de l'invention est celui des procédés de chiffrement et de déchiffrement d'une information transmise au sein d'un réseau de télécommunication.

La présente invention concerne un procédé de chiffrement d'une information transmise au sein d'un réseau de communication ainsi qu'un procédé de déchiffrement de l'information chiffrée. La présente invention concerne également un réseau de communication, un produit-programme d'ordinateur et un support lisible par un ordinateur permettant la mise en œuvre de tels procédés.

### ARRIERE-PLAN TECHNOLOGIQUE DE L'INVENTION

Actuellement, certains réseaux de communication offrent des solutions pour chiffrer les transmissions de données et/ou de média tel que la voix. Certains réseaux dits « chiffrés » nécessitent le chiffrement des adresses des terminaux pour résister à une analyse du trafic réseau et assurer la confidentialité des informations transmises au sein de ces réseaux.

Typiquement, c'est généralement le cas d'une infrastructure de réseau professionnel de radiocommunication de type PMR, acronyme couramment utilisé pour la dénomination anglo-saxonne « Professional Mobile Radio » signifiant en français « Radio Mobile Professionnelle ».

Les réseaux professionnels de communication PMR de type TETRA^{®}, pour «TErrestrial Trunked RAdio » en anglais, ou TETRAPOL^{®}, ou encore de type P25^{®}, défini par la « Telecommunications Industry Association (TIA) », sont des réseaux indépendants de communication mobile dédiés à l'usage des entreprises ou des administrations, notamment pour assurer la sécurité publique, la sécurité industrielle ou les activités de transport. Les réseaux professionnels de communication PMR sont ainsi largement utilisés par les services de sécurité publique et des secours, et également par bien d'autres catégories d'utilisateurs par exemple dans les transports publics, les aéroports, etc. Ce sont des réseaux privés qui présentent un haut niveau de sécurité. Ces réseaux privés peuvent dans certains cas constituer des réseaux de communication en mode direct entre terminaux, c'est-à-dire que la communication s'effectue entre les terminaux sans entité intermédiaire.

Les réseaux professionnels de communication PMR ont une architecture cellulaire commune à tout type de réseaux de communication comprenant un ensemble de terminaux de communication et un ou plusieurs points d'accès. Les terminaux de communication sont des terminaux mobiles ou fixes. Les terminaux mobiles se connectent au réseau de communication via un point d'accès sans-fil ou peuvent fonctionner directement en mode direct avec les autres terminaux mobiles sans point d'accès. Les terminaux fixes se connectent au réseau de communication via des points d'accès d'infrastructure. Les terminaux de communication mobiles et terminaux de communication fixes seront appelés indistinctement « terminaux » dans la suite de la présente demande. Les points d'accès sans-fil et les points d'accès d'infrastructure seront appelés indistinctement « points d'accès » et notés PA dans la suite de la présente demande.

Les terminaux des réseaux professionnels de communication chiffrés implémentent, un ou plusieurs procédés de chiffrement et déchiffrement. Ces procédés de chiffrement et déchiffrement sont appliqués à différents services tels que la protection des adresses, des données, de voix, de média. Les adresses peuvent être aussi bien des adresses individuelles de terminaux ou des adresses collectives désignant alors un groupe d'au moins deux terminaux.

Un procédé de chiffrement est un procédé de cryptographie permettant de rendre la compréhension d'une information impossible à toute personne qui n'a pas la clé de déchiffrement. Afin de rendre compréhensible l'information chiffrée, le procédé de déchiffrement doit être appliqué à l'information chiffrée. Il est courant de diviser les procédés de chiffrement en deux catégories : les procédés de chiffrement symétrique et les procédés de chiffrement asymétrique. Les procédés de chiffrement symétrique se basent sur une clé permettant le déchiffrement du texte chiffré qui est la même que la clé ayant été utilisée pour chiffrer le texte en clair. Les procédés de chiffrement asymétrique utilisent un ensemble de deux clés : une clé publique pour le chiffrement et une clé privée pour le déchiffrement. Un procédé de chiffrement utilise une ou deux clés. Généralement, des clés communes et des clés individuelles sont distribuées permettant la gestion de différentes qualités de services de communication pour les terminaux du réseau. Les réseaux professionnels de communication chiffrés nécessitent notamment une architecture de réseau de communication incluant un serveur de gestion de clés. Par souci de simplicité, ces éléments ne sont pas mentionnés dans la suite de la demande, mais il est évident que tous les types de clés peuvent être utilisés par les procédés de chiffrement et de déchiffrement tels que décrits dans la présente demande. De même, le réseau de communication permettant la mise en œuvre des procédés de chiffrement et de déchiffrement selon l'invention peut comprendre un serveur de gestion de clés.

Il est généralement admis que le niveau de sécurité au sein d'un réseau de communication dépend notamment des procédés de chiffrement et de déchiffrement appliqués aux informations transmises au sein des réseaux. De plus, le niveau de sécurité d'un réseau de communication est remis en cause par de nouvelles attaques. Par exemple, les attaques quantiques conduiront à remplacer ou modifier une grande partie des procédés de chiffrement et de déchiffrement couramment utilisés au sein des réseaux de communication. Ainsi, il est parfois nécessaire d'augmenter le niveau de sécurité du réseau de communication en migrant entièrement ou partiellement l'ensemble des terminaux d'une capacité de chiffrement vers une seconde capacité de chiffrement. Une capacité de chiffrement est la capacité d'une entité d'un réseau de communication à mettre en œuvre un procédé de chiffrement. La capacité de chiffrement peut être dépendante des caractéristiques matérielles et/ou logicielles de chaque entité d'un réseau de communication. Ainsi, cette capacité de chiffrement peut être déduite, par exemple de la version matérielle de l'entité, ou notifiée, par exemple par le point d'accès à l'ensemble des terminaux. De plus, cette capacité de chiffrement peut être modifiée par exemple par une mise à jour logicielle.

Dans le cas d'un réseau de communication existant opérationnel, tous les terminaux accédant au réseau de communication doivent disposer simultanément de la même capacité de chiffrement. Afin de mettre en œuvre le nouveau procédé de chiffrement, il est alors nécessaire de rappeler tous les terminaux pour modifier le matériel ou le logiciel desdits terminaux. Ceci requiert donc une interruption du fonctionnement des terminaux. En outre, il est parfois nécessaire de remplacer les terminaux qui ne peuvent migrer vers la nouvelle capacité de chiffrement.

Une autre solution est de permettre la cohabitation de deux types de chiffrement au sein d'un réseau de communication. Ainsi, le réseau de communication comprend deux ensembles de terminaux :
- Un premier ensemble des terminaux déjà déployés, ayant la première capacité de chiffrement, fonctionne avec l'ancien procédé de chiffrement,
- Un deuxième ensemble de terminaux en migration ou en déploiement, ayant la deuxième capacité de chiffrement, fonctionne avec le nouveau procédé de chiffrement.

La cohabitation de deux types de chiffrement telle qu'implémentée par les procédés actuels présentent toutefois de nombreux inconvénients. Par exemple, les protocoles standardisés ne permettent pas une modification sans rompre l'interopérabilité entre les anciens terminaux et une infrastructure modifiée, a fortiori dans un réseau opérationnel. De plus, l'envoi des communications de l'infrastructure vers une pluralité de terminaux via un point d'accès n'est plus possible par l'utilisation d'un unique procédé de chiffrement commun. Un autre inconvénient est que l'interopérabilité entre les terminaux des deux ensembles n'est pas assurée et que cette gestion de deux procédés de chiffrement complexifie les opérations et la maintenance du réseau. Enfin, lorsque le procédé de chiffrement est appliqué aux adresses des terminaux, il n'est plus possible pour le terminal ou le point d'accès de savoir avec quel procédé de chiffrement l'adresse du terminal a été chiffrée lors d'une communication entre un terminal et un point d'accès. Ainsi, il n'est plus possible de discriminer les terminaux en utilisant leur adresse chiffrée. En effet, une adresse chiffrée d'un premier terminal et celle d'un second terminal peuvent être égales bien que leurs adresses claires soient différentes.

Il existe donc un besoin de développer un procédé de chiffrement permettant la cohabitation de deux types de chiffrement ne présentant pas les inconvénients précités.

### RESUME DE L'INVENTION

L'invention offre une solution aux problèmes évoqués précédemment, en proposant un chiffrement symétrique permettant la cohabitation de deux types de chiffrement différents au sein d'un réseau de communication. L'invention utilise notamment le fait que les informations transmises sont comprises dans un ensemble fini et connu d'informations pour identifier l'information comme étant chiffrée selon l'un ou l'autre des types de chiffrement. De plus, le second type de chiffrement utilise judicieusement une fonction de chiffrement notée 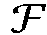 2 dans la suite de la demande qui est une fonction composée avec 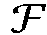 2 = 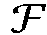 1 *o* 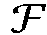 3 et avec la fonction F1 la fonction de chiffrement du premier type de chiffrement. Ainsi, lors du déchiffrement, il est possible d'identifier, en appliquant la fonction inverse notée 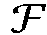 1⁻¹ de la fonction de chiffrement *F1* à l'information chiffrée reçue, si l'information chiffrée reçue est une information claire qui a été chiffrée par le premier type de chiffrement ou par le second type de chiffrement. Lorsque lors du déchiffrement, il n'est pas possible d'identifier en appliquant la fonction 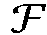 1⁻¹ à l'information chiffrée reçue ; que l'information chiffrée reçue est une information claire qui a été chiffrée par le premier type de chiffrement ou en appliquant également 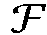 3⁻¹ par le second type de chiffrement cela signifie que l'information chiffrée reçue ne doit pas être considérée comme valide et un traitement adéquat de cet événement peut être mis en œuvre.

Un aspect de l'invention concerne ainsi un procédé de chiffrement symétrique d'une information transmise au sein d'un réseau de communication comprenant un ensemble d'entités, dans lequel :
- L'information est envoyée par une entité émettrice à une entité réceptrice, avec l'entité émettrice et l'entité réceptrice appartenant à l'ensemble d'entités,
- Chaque entité de l'ensemble d'entités ayant une capacité de chiffrement prédéterminée parmi :
   - Une première capacité de chiffrement permettant un chiffrement basé sur une première fonction de chiffrement F1, ou
   - Une seconde capacité de chiffrement permettant un chiffrement basé sur une seconde fonction de chiffrement 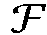 2, la seconde fonction de chiffrement 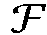 2 étant obtenue à partir de la première fonction de chiffrement 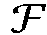 1 et d'une troisième fonction de chiffrement 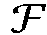 3 avec 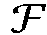 2 = 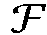 1 *o* 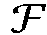 3,
- L'information est une information claire comprise dans un ensemble d'informations claires ENS_P, chaque information claire de l'ensemble d'informations claires ENS_P pouvant être obtenue par l'ensemble des entités, l'ensemble d'informations claires ENS_P étant une union de trois sous-ensembles disjoints ENS_L, ENS_M et ENS_N d'informations claires avec :
   - Chaque sous-ensemble ENS_L, ENS_M et ENS_N comprenant un nombre fini et connu d'informations claires,
   - Un premier sous-ensemble (ENS_M) ayant un nombre d'informations claires inférieur ou égal au nombre d'informations claires comprises dans un second sous-ensemble (ENS_N) et une image par la troisième fonction de chiffrement 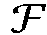 3 du premier sous-ensemble (ENS_M) étant incluse dans le second sous-ensemble (ENS_N),
   - Chaque information claire du troisième sous-ensemble ENS_L étant une information pouvant être envoyée par l'entité émettrice ayant la première capacité de chiffrement,
   - Chaque information claire du premier sous-ensemble ENS_M étant une information pouvant être envoyée par l'entité émettrice ayant la seconde capacité de chiffrement,
   - Chaque information claire du second sous-ensemble ENS_N étant une information claire ne pouvant être envoyée par l'entité émettrice,
- Le procédé comprenant :
   - Chiffrer, au niveau de l'entité émettrice, l'information :
      - Par la première fonction de chiffrement F1 lorsque l'entité émettrice a la première capacité de chiffrement, ou
      - Par la seconde fonction de chiffrement 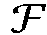 2 lorsque l'entité émettrice a la seconde capacité de chiffrement, et
   - Envoyer, par l'entité émettrice, l'information chiffrée à l'entité réceptrice.

Grâce à l'invention, deux types de chiffrement différents peuvent cohabiter au sein d'un réseau de communication. En effet, l'invention garantit que le mécanisme global de déchiffrement utilisé au niveau d'une entité réceptrice est bien l'inverse du mécanisme de chiffrement appliqué à l'information envoyée par l'entité émettrice. De plus, l'invention permet d'augmenter le degré de sécurité global de l'identification des terminaux du réseau tout en assurant une interopérabilité entre différentes catégories de terminaux opérationnels.

Un autre aspect de l'invention concerne un procédé de déchiffrement d'une information chiffrée selon l'invention comprenant :
- Recevoir, par l'entité réceptrice, l'information chiffrée envoyée par l'entité émettrice,
- Déchiffrer, par l'entité réceptrice, l'information chiffrée reçue, le déchiffrement comprenant :
   - Obtenir une première information en appliquant une première fonction de déchiffrement 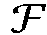 1⁻¹ à l'information chiffrée, la première fonction de déchiffrement 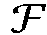 1⁻¹étant la fonction inverse de la première fonction de chiffrement 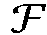 1, et
   - Lorsque la première information obtenue est égale à une information claire comprise dans le troisième sous-ensemble d'informations claires, identifier la première information obtenue comme étant une information claire envoyée par l'entité émettrice avec la première capacité de chiffrement,
   - Lorsque la première information obtenue est égale à une information claire comprise dans le second sous-ensemble d'informations claires :
      - Obtenir une seconde information en appliquant à la première information obtenue, la troisième fonction de déchiffrement 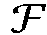 3⁻¹ qui est la fonction inverse de la troisième fonction de chiffrement 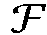 3, et
      - Identifier la seconde information obtenue comme étant l'information envoyée par l'entité émettrice avec la seconde capacité de chiffrement,
   - Lorsque la première information obtenue est égale à une information claire comprise dans le premier sous-ensemble d'informations claires, identifier la première information obtenue comme n'étant pas l'information claire envoyée par l'entité émettrice.

Outre les caractéristiques qui viennent d'être évoquées dans les paragraphes précédents, les procédés de chiffrement et de déchiffrement selon un aspect de l'invention peuvent présenter une ou plusieurs caractéristiques complémentaires parmi les suivantes, considérées individuellement ou selon toutes les combinaisons techniquement possibles :
- L'information envoyée par l'entité émettrice est une adresse réseau de l'entité émettrice ou une adresse réseau de l'entité réceptrice, et/ou
- L'entité émettrice ayant la première capacité de chiffrement est migrée pour acquérir la seconde capacité de chiffrement, et/ou
- Une nouvelle entité est ajoutée dans le réseau de communication, chaque nouvelle entité ajoutée ayant la première capacité de chiffrement ou la seconde capacité de chiffrement, et/ou
- L'entité réceptrice ayant la première capacité de déchiffrement est migrée pour acquérir la seconde capacité de déchiffrement, et/ou
- Une nouvelle entité est ajoutée dans le réseau de communication, chaque nouvelle entité ajoutée ayant la première capacité de déchiffrement ou la seconde capacité de déchiffrement, et/ou
- le réseau de communication est de type TETRA^{®} ou TETRAPOL^{®}, et/ou
- la première capacité de chiffrement du réseau de communication est de type MAC THEN ENCRYPT et la première capacité de déchiffrement du réseau de communication est de type DECRYPT THEN MAC,
- L'ensemble d'entités est un ensemble de terminaux et un ensemble d'au moins un point d'accès, chaque terminal de l'ensemble de terminaux se connectant au réseau de communication via un point d'accès compris dans l'ensemble d'au moins un point d'accès, dans lequel :
   - L'information est envoyée par une entité émettrice à une entité réceptrice, avec :
   - L'entité émettrice étant un premier terminal compris dans l'ensemble de terminaux ou un point d'accès compris dans l'ensemble d'au moins un point d'accès, et
   - L'entité réceptrice étant le point d'accès ou un deuxième terminal compris dans l'ensemble de terminaux et différent du premier terminal lorsque l'entité émettrice est le premier terminal, ou
   - L'entité réceptrice étant le premier terminal lorsque l'entité émettrice est le point d'accès.
- L'ensemble d'entités est un ensemble de terminaux mobiles communiquant en mode direct, dans lequel :
   - L'information est envoyée par une entité émettrice à une entité réceptrice, avec :
      - L'entité émettrice étant un premier terminal mobile compris dans l'ensemble de terminaux mobiles, et
      - L'entité réceptrice étant un deuxième terminal mobile compris dans l'ensemble de terminaux mobiles et différent du premier terminal.

Un second aspect de l'invention concerne un réseau de communication comprenant un ensemble d'entités, dans lequel :
- L'information est envoyée par une entité émettrice à une entité réceptrice, avec l'entité émettrice et l'entité réceptrice appartenant à l'ensemble d'entités,
- Chaque entité de l'ensemble d'entités ayant une capacité de chiffrement prédéterminée parmi :
   - Une première capacité de chiffrement permettant un chiffrement basé sur une première fonction de chiffrement F1, ou
   - Une seconde capacité de chiffrement permettant un chiffrement basé sur une seconde fonction de chiffrement 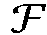 2, la seconde fonction de chiffrement 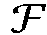 2 étant obtenue à partir de la première fonction de chiffrement F1 et d'une troisième fonction de chiffrement 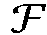 3 avec 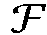 2 = 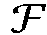 1 *o* 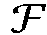 3,
- Une information est envoyée par l'entité émettrice, l'information est une information claire comprise dans un ensemble d'informations claires, chaque information claire de l'ensemble d'informations claires pouvant être obtenue par l'ensemble des entités, l'ensemble d'informations claires étant une union de trois sous-ensembles disjoints d'informations claires avec :
   - Chaque sous-ensemble ENS_L, ENS_M et ENS_N comprenant un nombre fini et connu d'informations claires,
   - Un premier sous-ensemble ENS_M ayant un nombre d'informations claires inférieur ou égal au nombre d'informations claires comprises dans un second sous-ensemble ENS_N et une image par la troisième fonction de chiffrement 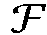 3 du premier sous-ensemble ENS_M étant incluse dans le second sous-ensemble ENS_N,
   - Chaque information claire du troisième sous-ensemble ENS_L étant une information pouvant être envoyée par l'entité émettrice ayant la première capacité de chiffrement,
   - Chaque information claire du premier sous-ensemble ENS_M étant une information pouvant être envoyée par l'entité émettrice ayant la seconde capacité de chiffrement,
   - Chaque information claire du second sous-ensemble ENS_N étant une information claire ne pouvant être envoyée par l'entité émettrice,
- L'entité émettrice est configurée pour exécuter les étapes suivantes :
   - Chiffrer l'information :
      - Par la première fonction de chiffrement F1 lorsque l'entité émettrice a la première capacité de chiffrement, ou
      - Par la seconde fonction de chiffrement 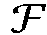 2 lorsque l'entité émettrice a la seconde capacité de chiffrement, et
   - Envoyer l'information chiffrée à l'entité réceptrice.
- L'entité réceptrice étant configurée pour exécuter les étapes suivantes :
   - Recevoir, l'information chiffrée envoyée par l'entité émettrice,
   - Déchiffrer, l'information chiffrée reçue, le déchiffrement comprenant :
      - Obtenir une première information en appliquant une première fonction de déchiffrement 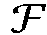 1⁻¹ à l'information chiffrée, la première fonction de déchiffrement 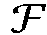 1⁻¹ étant la fonction inverse de la première fonction de chiffrement F1, et
      - Lorsque la première information obtenue est égale à une première information claire comprise dans le troisième sous-ensemble ENS_L d'informations claires, identifier la première information comme étant la première information claire envoyée par l'entité émettrice avec la première capacité de chiffrement,
      - Lorsque la première information obtenue est égale à une information claire comprise dans le second sous-ensemble ENS_N d'informations claires :
         - Obtenir une information en appliquant à la première information obtenue, la troisième fonction de déchiffrement 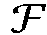 3⁻¹ qui est la fonction inverse de la troisième fonction de chiffrement 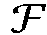 3, et
         - Identifier l'information obtenue comme étant l'information claire envoyée par l'entité émettrice avec la seconde capacité de chiffrement, et
      - Lorsque la première information obtenue est égale à une information claire comprise dans le premier sous-ensemble ENS_M, identifier la première information obtenue comme n'étant pas une information claire envoyée par l'entité émettrice.

Outre les caractéristiques qui viennent d'être évoquées dans les paragraphes précédents, le réseau de communication selon un aspect de l'invention peut présenter la caractéristique complémentaire :
- L'ensemble d'entités est un ensemble de terminaux et un ensemble d'au moins un point d'accès, chaque terminal de l'ensemble de terminaux se connectant au réseau de communication via un point d'accès compris dans l'ensemble d'au moins un point d'accès, dans lequel :
   - L'information est envoyée par une entité émettrice à une entité réceptrice, avec :
      - L'entité émettrice étant un premier terminal compris dans l'ensemble de terminaux ou un point d'accès compris dans l'ensemble d'au moins un point d'accès, et
      - L'entité réceptrice étant le point d'accès ou un deuxième terminal compris dans l'ensemble de terminaux et différent du premier terminal lorsque l'entité émettrice est le premier terminal, ou
      - L'entité réceptrice étant le premier terminal lorsque l'entité émettrice est le point d'accès,
- L'ensemble d'entités est un ensemble de terminaux mobiles communiquant en mode direct, dans lequel :
   - L'information est envoyée par une entité émettrice à une entité réceptrice, avec :
      - L'entité émettrice étant un premier terminal mobile compris dans l'ensemble de terminaux mobiles, et
      - L'entité réceptrice étant un deuxième terminal mobile compris dans l'ensemble de terminaux mobiles et différent du premier terminal mobile.

Un troisième aspect de l'invention concerne un produit programme d'ordinateur comprenant des instructions qui, lorsque le programme est exécuté par un ordinateur, conduisent celui-ci à mettre en œuvre le procédé selon l'invention.

Un quatrième aspect de l'invention concerne un support d'enregistrement lisible par ordinateur comprenant des instructions qui, lorsqu'elles sont exécutées par un ordinateur, conduisent celui-ci à mettre en œuvre le procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre un schéma synoptique d'un exemple de procédé de chiffrement selon l'invention.
- La figure 2 montre un schéma synoptique d'un exemple de procédé de déchiffrement selon l'invention.
- La figure 3 montre une représentation schématique d'un exemple d'une partition des informations en clair pouvant être utilisée par un procédé de chiffrement et de déchiffrement selon l'invention.
- La figure 4 montre un exemple de réseau de communication pouvant mettre en œuvre le procédé de chiffrement et/ou le procédé de déchiffrement selon l'invention.
- La figure 5 montre un schéma synoptique d'un exemple d'une étape du procédé de déchiffrement selon l'invention.

### DESCRIPTION DETAILLEE

Les figures sont présentées à titre indicatif et nullement limitatif de l'invention.

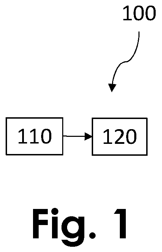

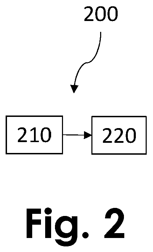

Les figures 1 et 2 montrent respectivement un schéma synoptique d'un exemple de procédé 100 de chiffrement selon l'invention et de procédé 200 de déchiffrement selon l'invention.

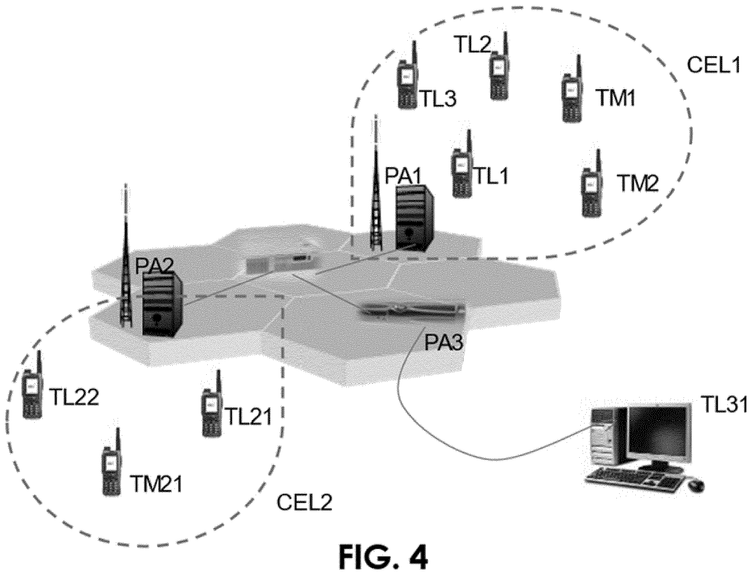

Ces procédés peuvent être mis en œuvre par un réseau de communication. Un exemple de réseau de communication pouvant mettre en œuvre ces procédés 100 de chiffrement et 200 de déchiffrement est illustré à la figure 4. Chaque terminal se connecte au réseau via un point d'accès ou communique en mode direct avec un autre terminal. Le réseau de communication comprend notamment des terminaux mobiles ou fixes notés TL1, TL2, TL3, TL21, TL22, TL31, TM1, TM2 et TM21 sur la figure 4. Le réseau de communication comprend aussi des points d'accès notés PA1, PA2 et PA3 sur la figure 4. Ces points d'accès sont optionnels pour la mise en œuvre des procédés 100 de chiffrement et 200 de déchiffrement lorsque les terminaux communiquent en mode direct. Par exemple, le terminal TL1 se connecte au réseau via le point d'accès PA1 alors que le terminal TL21 se connecte au réseau via le point d'accès PA2. Les procédés 100 de chiffrement et 200 de déchiffrement permettent l'envoi de manière sécurisée d'informations au sein du réseau. Ainsi, ces procédés ont par exemple une utilité particulière dans les réseaux de communication PMR, pour « Professional Mobile Radiocommunications », de type TETRA^{®}, pour « Terrestrial Trunked Radio » en anglais, ou de type TETRAPOL^{®}, défini par le forum d'industriels TETRAPOL (http://www.tetrapol.com). Les réseaux professionnels de communication PMR de type TETRA^{®} ou TETRAPOL^{®} sont des réseaux indépendants de communication mobile dédiés à l'usage des entreprises ou des administrations, notamment pour assurer la sécurité publique, la sécurité industrielle ou dans les activités de transport. Les réseaux professionnels de communication PMR de type TETRA^{®}, pour «TErrestrial Trunked RAdio » en anglais, ou TETRAPOL^{®} adaptés pour mettre en œuvre l'invention peuvent fonctionner avec une infrastructure, i.e. avec au moins un point d'accès, ou seulement avec des terminaux, i.e. en mode direct entre terminaux. Les réseaux PMR sont largement utilisés par les services de sécurité publique (gendarmerie et police nationale par exemple) et des secours, et également par bien d'autres catégories d'utilisateurs (transports publics, aéroports,...). Ce sont des réseaux privés qui présentent un haut niveau de sécurité.

Chaque entité du réseau de communication a une capacité de chiffrement et/ou de déchiffrement. Cette capacité de chiffrement et/ou de déchiffrement peut varier suivant l'entité, i.e. terminal ou le point d'accès considéré. Cette capacité de chiffrement et/ou de déchiffrement est prédéterminée, c'est-à-dire qu'elle est déterminée pour chaque entité du réseau de communication avant la mise en œuvre du procédé 100 de chiffrement ou 200 de déchiffrement. La capacité de chiffrement de chaque entité du réseau de communication est sélectionnée parmi une première ou une seconde capacité de chiffrement. La première capacité de chiffrement permet un chiffrement basé sur une première fonction de chiffrement F1. La seconde capacité de chiffrement permet un chiffrement basé sur une seconde fonction de chiffrement 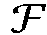 2. La seconde fonction de chiffrement 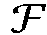 2 est obtenue à partir de la première fonction de chiffrement 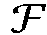 1 et d'une troisième fonction de chiffrement 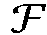 3. Plus précisément la fonction de chiffrement 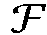 2 est une fonction composée avec : 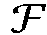 2 = 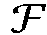 1 *o* 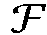 3. De manière évidente, la troisième fonction de chiffrement 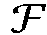 3 est différente de la fonction inverse notée 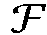 1⁻¹ de la première fonction de chiffrement F1. La capacité de chiffrement de chaque entité du réseau de communication est déterminée par ses caractéristiques matérielles et/ou logicielles. Par exemple, un premier terminal, de par ses caractéristiques matérielles limitées, peut n'être compatible qu'avec un chiffrement basé sur la première fonction de chiffrement F1. Ainsi, ce premier terminal aura la première capacité de chiffrement. Ce premier terminal pourra donc changer de capacité de chiffrement seulement si une évolution matérielle est effectuée. Dans un autre exemple, un second terminal, de par ses caractéristiques matérielles, est compatible avec un chiffrement basé sur la première fonction de chiffrement F1 ou sur la seconde fonction de chiffrement 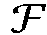 2. Dans cet exemple, le second terminal utilisera un chiffrement basé sur la première fonction de chiffrement F1 ou sur la seconde fonction de chiffrement 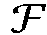 2 en fonction de ses caractéristiques logicielles. Ce second terminal pourra donc changer de capacité de chiffrement avec une migration logicielle, i.e. une mise à jour logicielle. Chaque nouvelle entité ajoutée dans le réseau de communication, devra aussi avoir la première capacité de chiffrement ou la seconde capacité de chiffrement. Une entité possède en général une capacité de chiffrement et une capacité de déchiffrement. Dans ce cas, une entité ayant une première capacité de chiffrement doit aussi avoir une première capacité de déchiffrement. De même, si une entité a une seconde capacité de chiffrement, elle doit aussi avoir une seconde capacité de déchiffrement. Ainsi, si un terminal, suite à une évolution matérielle ou une mise à jour logicielle par exemple, est migré d'une capacité de chiffrement vers une autre, son éventuelle capacité de déchiffrement doit aussi être migrée.

Dans un premier exemple, la première capacité de chiffrement utilisée par au moins une entité du réseau de communication est de type Bluetooth E0 et la deuxième capacité de chiffrement utilisée par au moins une autre entité du réseau de communication est de type Bluetooth AES-CCM.

Dans un second exemple, la première capacité de chiffrement utilisée par au moins une entité du réseau de communication est de type MAC THEN ENCRYPT et la première capacité de déchiffrement utilisée par au moins une entité du réseau de communication est de type DECRYPT THEN MAC. Par exemple, si la première capacité de chiffrement d'une entité est le MAC THEN ENCRYPT alors son éventuelle capacité de déchiffrement sera le DECRYPT THEN MAC. Le chiffrement MAC THEN ENCRYPT consiste à produire un MAC, pour « message authentification code » en anglais, sur la base de l'information claire à transmettre, puis l'information claire et le mac sont chiffrés pour produire un texte chiffré. Le texte chiffré, contenant le MAC chiffré, peut ensuite par exemple être envoyé. Le déchiffrement DECRYPT THEN MAC consiste à déchiffrer le texte chiffré afin d'obtenir le MAC et l'information claire. Ensuite le MAC est utilisé pour vérifier que l'information claire n'est pas corrompue. Dans cet exemple, une deuxième capacité de chiffrement utilisée par au moins une autre entité du réseau de communication est aussi de type MAC THEN ENCRYPT avec un MAC différent.

Par souci de simplicité, la description du procédé 100 de chiffrement et 200 de déchiffrement de l'invention ne mentionne ni les clés, ni les paramètres d'initialisation utilisés lors des opérations de chiffrement et de déchiffrement. Néanmoins, ces paramètres existent bien et le remplacement de la fonction F1 par la fonction 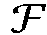 2 s'effectue sans aucun impact protocolaire. Les éléments de protocoles associés à la fonction 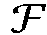 2 sont les mêmes que ceux associés à la fonction F1. Ainsi, tout mode d'opération d'un chiffrement symétrique par bloc ou par flot, utilisé dans un protocole, qu'il soit déterministe ou non-déterministe, est applicable à la présente invention. Enfin, il faut noter que l'invention concerne le chiffrement symétrique. Ainsi, le procédé 100 de chiffrement et le procédé 200 de déchiffrement utilise la même clé pour chiffrer et pour déchiffrer une information.

Au sein du réseau de communication, un terminal peut donc envoyer une information à un autre terminal via un ou plusieurs points d'accès. Un terminal peut aussi envoyer une information directement à un autre terminal, c'est-à-dire sans que l'information soit transmise via un point d'accès. Dans la suite de la description, nous nommerons « entité émettrice » le terminal ou le point d'accès envoyant l'information à transmettre à une entité réceptrice. De manière similaire, nous nommerons « entité réceptrice » le terminal ou le point d'accès recevant l'information à transmettre. Ainsi, dans un premier exemple, l'ensemble des entités peut comprendre uniquement un ensemble de terminaux alors que dans un second exemple, l'ensemble des entités peut comprendre un ensemble de terminaux et un ensemble d'au moins un point d'accès.

Des informations sont transmises au sein du réseau de communication en utilisant les procédés 100 et 200. Ces informations sont des informations claires, c'est-à-dire des informations qui n'ont pas été préalablement chiffrées selon la première capacité de chiffrement ou la deuxième capacité de chiffrement. Une information chiffrée est une information ayant été modifiée à l'aide d'un procédé de chiffrement afin de rendre la compréhension de cette information impossible à toute personne n'ayant pas la clé utilisée pour le déchiffrement. Par exemple, une information transmise à l'aide des procédés selon l'invention peut être une adresse réseau de l'entité émettrice ou une adresse réseau de l'entité réceptrice. Dans un autre exemple, l'information transmise à l'aide des procédés selon l'invention peut aussi être une identité multiutilisateur ou encore des données redondantes.

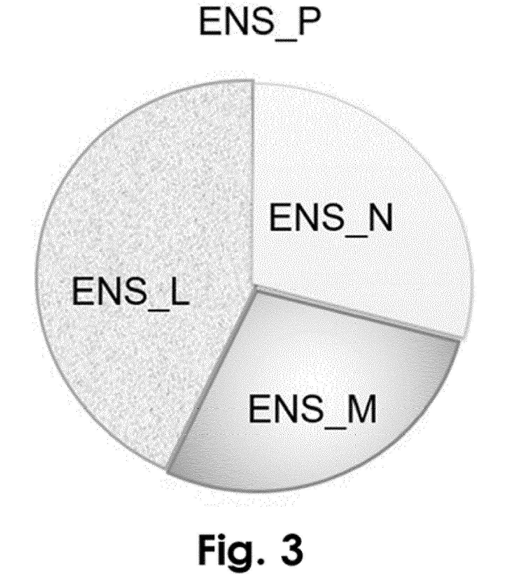

L'information transmise dans les procédés 100 et 200 est une information claire comprise dans un ensemble ENS_P d'informations claires. L'ensemble des informations claires ENS_P peut être obtenu par chaque terminal de l'ensemble des terminaux et chaque point d'accès de l'ensemble des points d'accès. Le terme « obtenir » signifie dans la présente demande que ces informations peuvent par exemple être stockées, reçues ou calculées. Par exemple, l'ensemble des informations claires ENS_P peut être stocké sous la forme d'une liste par tous les terminaux et les points d'accès du réseau de communication ou sur un serveur accessible par tous les terminaux et les points d'accès du réseau de communication. De manière alternative ou complémentaire, chaque terminal et chaque point d'accès du réseau de communication peut calculer l'ensemble des informations claires ENS_P en suivant une règle ou une norme partagée par tous les terminaux et les points d'accès du réseau de communication. La figure 3 illustre un exemple de partitionnement de cet ensemble ENS_P d'informations claires. Ainsi l'ensemble ENS-P est divisé en 3 sous-ensembles disjoints ENS_L, ENS_M et ENS_N. L'ensemble ENS_P comprend un nombre fini et connu d'informations claires. De même, chaque sous-ensemble ENS_L, ENS_M et ENS_N comprend un nombre fini et connu d'informations claires. Les premier et second sous-ensembles ENS_M et ENS_N comprennent un même nombre d'informations claires. Les informations du premier sous-ensemble ENS_M peuvent être envoyées par une entité émettrice ayant la seconde capacité de chiffrement alors que les informations du troisième sous-ensemble ENS_L peuvent être envoyées par une entité émettrice ayant la première capacité de chiffrement. Les informations du second sous-ensemble ENS_N ne peuvent être envoyées par l'entité émettrice. Par exemple, les informations du second sous-ensemble ENS_N sont les adresses réseaux non encore attribuées au sein du réseau de communication dans l'exemple où l'information transmise est une adresse réseau.

Le procédé 100 de chiffrement comprend deux étapes qui sont effectuées au niveau de l'entité émettrice. La première étape 110 consiste à chiffrer l'information. Si l'entité émettrice a la première fonction de capacité de chiffrement, le chiffrement sera effectué à l'aide de la première fonction de chiffrement F1. Si l'entité émettrice a la seconde fonction de capacité de chiffrement, le chiffrement sera effectué à l'aide de la seconde fonction de chiffrement 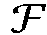 2. La seconde étape 120 consiste à envoyer l'information chiffrée à l'entité réceptrice.

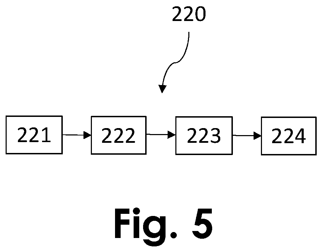

Le procédé 200 est ensuite nécessaire pour permettre à l'entité réceptrice de déchiffrer l'information chiffrée. Le procédé 200 de déchiffrement comprend deux étapes 210 et 220 qui sont effectuées au niveau de l'entité réceptrice. La première étape 210 consiste à recevoir l'information chiffrée envoyée, par exemple à l'étape 120 du procédé de chiffrement 100, par l'entité émettrice. La deuxième étape 220 consiste à déchiffrer l'information chiffrée. Cette seconde étape comprend quatre sous-étapes 221 à 224. La figure 5 montre un schéma synoptique d'un exemple de cette seconde étape.

La première sous-étape 221 de l'étape 220 consiste à appliquer une première fonction de déchiffrement 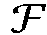 1⁻¹ à l'information chiffrée. La fonction 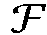 1⁻¹ est la fonction inverse de la fonction de chiffrement F1. Cette sous-étape permet d'obtenir une première information. Ensuite un premier test est effectué pour vérifier si cette première information obtenue est égale à une première information claire comprise dans le troisième sous-ensemble ENS_L d'informations claires. Ainsi, lorsque la première information obtenue est égale à une information du troisième sous-ensemble ENS_L d'informations claires, cette première information obtenue est identifiée comme étant la première information claire envoyée par l'entité émettrice avec la première capacité de chiffrement. En d'autres termes, lorsque la première information obtenue est égale à une information du troisième sous-ensemble ENS_L d'informations claires, l'entité réceptrice sait que la première information correspond à l'information claire envoyée et chiffrée par une entité émettrice ayant la première capacité de chiffrement. Un second test est ensuite effectué pour vérifier si cette première information obtenue est égale à une information claire comprise dans le second sous-ensemble ENS_N d'informations claires. Dans un exemple, ce second test peut être effectué uniquement lorsque la première information obtenue est identifiée comme étant la première information claire envoyée par l'entité émettrice avec la première capacité de chiffrement. Lorsque la première information obtenue est égale à une information claire comprise dans le second sous-ensemble (ENS_N) d'informations claires, la troisième fonction de déchiffrement 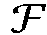 3⁻¹ qui est la fonction inverse de la troisième fonction de chiffrement 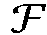 3 est appliquée à la première information obtenue à l'étape 221. Ainsi une seconde information est obtenue durant cette seconde sous-étape 222. Cette seconde information obtenue est identifiée, à la sous-étape 223, comme étant l'information claire envoyée par l'entité émettrice avec la seconde capacité de chiffrement. Enfin, lorsque la première information obtenue à l'étape 221 est égale à une information claire comprise dans le premier sous-ensemble ENS_M, la première information obtenue à l'étape 221 est identifiée à la sous-étape 224 comme n'étant pas une information claire envoyée par l'entité émettrice. Dans ce cas, l'entité réceptrice pourra, par exemple, considérer cette information comme frauduleuse et ne pas la traiter ou même prévenir d'autres entités du réseau de communication d'une éventuelle tentative d'intrusion.

L'invention permet donc, pour un réseau de communication dans lequel cohabitent deux systèmes de chiffrement, de garantir que, pour une information transmise au sein de ce réseau de communication, le procédé de déchiffrement appliqué par l'entité réceptrice est bien l'inverse du procédé de chiffrement utilisé par l'entité émettrice. L'invention permet donc d'augmenter le degré de sécurité global de la transmission d'informations au sein du réseau de communication tout en assurant une interopérabilité entre différentes catégories d'entités opérationnelles, i.e. les terminaux et les points d'accès. L'invention permet par exemple de conserver un parc de terminaux et/ou de points d'accès déjà en service inchangé et de mettre à jour graduellement un autre parc de terminaux et/ou de points d'accès ou même d'ajouter de nouveaux terminaux et/ou de nouveaux points d'accès. L'invention permet donc d'assurer la maintenance des entités du réseau tout en conservant au maximum les services opérationnels.

Sauf précision contraire, un même élément apparaissant sur des figures différentes présente une référence unique.

## Revendications

1. Procédé (100) de chiffrement symétrique d'une information transmise au sein d'un réseau de communication comprenant un ensemble d'entités, dans lequel :
- L'information est envoyée par une entité émettrice à une entité réceptrice, avec l'entité émettrice et l'entité réceptrice appartenant à l'ensemble d'entités,
- Chaque entité émettrice de l'ensemble d'entités ayant une capacité de chiffrement prédéterminée parmi :
o Une première capacité de chiffrement permettant un chiffrement basé sur une première fonction de chiffrement F1, ou
o Une seconde capacité de chiffrement permettant un chiffrement basé sur une seconde fonction de chiffrement 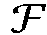 2, la seconde fonction de chiffrement 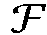 2 étant obtenue à partir de la première fonction de chiffrement F1 et d'une troisième fonction de chiffrement 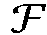 3 avec 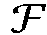 2 = 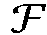 1 *o* 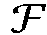 3,
- L'information est une information claire comprise dans un ensemble d'informations claires (ENS_P), chaque information claire de l'ensemble d'informations claires (ENS_P) pouvant être obtenue par l'ensemble des entités, l'ensemble d'informations claires (ENS_P) étant une union de trois sous-ensembles disjoints (ENS_L, ENS_M et ENS_N) d'informations claires avec :
o Chaque sous-ensemble (ENS_L, ENS_M et ENS_N) comprenant un nombre fini et connu d'informations claires,
o Un premier sous-ensemble (ENS_M) ayant un nombre d'informations claires inférieur ou égal au nombre d'informations claires comprises dans un second sous-ensemble (ENS_N) et une image par la troisième fonction de chiffrement 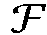 3 du premier sous-ensemble (ENS_M) est incluse dans le second sous-ensemble (ENS_N),
o Chaque information claire du troisième sous-ensemble (ENS_L) étant une information pouvant être envoyée par l'entité émettrice ayant la première capacité de chiffrement,
o Chaque information claire du premier sous-ensemble (ENS_M) étant une information pouvant être envoyée par l'entité émettrice ayant la seconde capacité de chiffrement,
o Chaque information claire du second sous-ensemble (ENS_N) étant une information claire ne pouvant être envoyée par l'entité émettrice,
- Le procédé (100) comprenant :
o chiffrer (110), au niveau de l'entité émettrice, l'information :
- par la première fonction de chiffrement F1 lorsque l'entité émettrice a la première capacité de chiffrement, ou
- par la seconde fonction de chiffrement 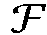 2 lorsque l'entité émettrice a la seconde capacité de chiffrement, et
o Envoyer (120), par l'entité émettrice, l'information chiffrée à l'entité réceptrice.

2. Procédé (200) de déchiffrement d'une information chiffrée selon la revendication précédente comprenant :
- Recevoir (210), par l'entité réceptrice, l'information chiffrée envoyée (120) par l'entité émettrice,
- Déchiffrer (220), par l'entité réceptrice, l'information chiffrée reçue (210), le déchiffrement comprenant :
o Obtenir (221) une première information en appliquant une première fonction de déchiffrement 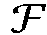 1⁻¹ à l'information chiffrée, la première fonction de déchiffrement 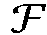 1⁻¹ étant la fonction inverse de la première fonction de chiffrement F1, et
o Lorsque la première information obtenue (221) est égale à une information claire comprise dans le troisième sous-ensemble (ENS_L) d'informations claires, identifier la première information obtenue comme étant une information claire envoyée par l'entité émettrice avec la première capacité de chiffrement,
o Lorsque la première information obtenue est égale à une information claire comprise dans le second sous-ensemble (ENS_N) d'informations claires :
- Obtenir (222) une seconde information en appliquant à la première information obtenue (221), la troisième fonction de déchiffrement 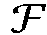 3⁻¹ qui est la fonction inverse de la troisième fonction de chiffrement 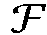 3, et
- Identifier (223) la seconde information obtenue (222) comme étant l'information claire envoyée par l'entité émettrice avec la seconde capacité de chiffrement, et
o Lorsque la première information obtenue (221) est égale à une information claire comprise dans le premier sous-ensemble (ENS_M), identifier (224) la première information obtenue (221) comme n'étant pas une information claire envoyée par l'entité émettrice.

3. Procédé (100, 200) selon l'une quelconque des revendications précédentes dans lesquels l'information envoyée par l'entité émettrice est une adresse réseau de l'entité émettrice ou une adresse réseau de l'entité réceptrice.

4. Procédé (100, 200) selon l'une quelconque des revendications précédentes dans lequel :
- L'entité émettrice ayant la première capacité de chiffrement est migrée pour acquérir la seconde capacité de chiffrement, et/ou
- Une nouvelle entité est ajoutée dans le réseau de communication, chaque entité ajoutée ayant la première capacité de chiffrement ou la seconde capacité de chiffrement, et/ou
- L'entité réceptrice ayant la première capacité de déchiffrement est migrée pour acquérir la seconde capacité de déchiffrement, et/ou
- Une nouvelle entité est ajoutée dans le réseau de communication, chaque nouvelle entité ajoutée ayant la première capacité de déchiffrement ou la seconde capacité de déchiffrement.

5. Procédé (100, 200) selon l'une quelconque des revendications précédentes dans lequel le réseau de communication est de type TETRA^{®} ou TETRAPOL^{®}.

6. Procédé (100, 200) selon l'une quelconque des revendications précédentes dans lequel la première capacité de chiffrement du réseau de communication est de type MAC THEN ENCRYPT et la première capacité de déchiffrement du réseau de communication est de type DECRYPT THEN MAC.

7. Procédé (100, 200) selon l'une quelconque des revendications précédentes dans lequel l'ensemble d'entités est un ensemble de terminaux et un ensemble d'au moins un point d'accès, chaque terminal de l'ensemble de terminaux se connectant au réseau de communication via un point d'accès compris dans l'ensemble d'au moins un point d'accès, dans lequel :
- L'information est envoyée par une entité émettrice à une entité réceptrice, avec :
o L'entité émettrice étant un premier terminal compris dans l'ensemble de terminaux ou un point d'accès compris dans l'ensemble d'au moins un point d'accès, et
o L'entité réceptrice étant le point d'accès ou un deuxième terminal compris dans l'ensemble de terminaux et différent du premier terminal lorsque l'entité émettrice est le premier terminal, ou
o L'entité réceptrice étant le premier terminal lorsque l'entité émettrice est le point d'accès.

8. Procédé (100, 200) selon l'une quelconque des revendications 1 à 6 dans lequel l'ensemble d'entités est un ensemble de terminaux mobiles communiquant en mode direct, dans lequel :
- L'information est envoyée par une entité émettrice à une entité réceptrice, avec :
o L'entité émettrice étant un premier terminal mobile compris dans l'ensemble de terminaux mobiles, et
o L'entité réceptrice étant un deuxième terminal mobile compris dans l'ensemble de terminaux mobiles et différent du premier terminal.

9. Réseau de communication comprenant un ensemble d'entités, dans lequel :
- L'information est envoyée par une entité émettrice à une entité réceptrice, avec l'entité émettrice et l'entité réceptrice appartenant à l'ensemble d'entités,
- Chaque entité de l'ensemble d'entités ayant une capacité de chiffrement prédéterminée parmi :
o Une première capacité de chiffrement permettant un chiffrement basé sur une première fonction de chiffrement F1, ou
o Une seconde capacité de chiffrement permettant un chiffrement basé sur une seconde fonction de chiffrement 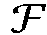 2, la seconde fonction de chiffrement 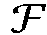 2 étant obtenue à partir de la première fonction de chiffrement F1 et d'une troisième fonction de chiffrement 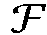 3 avec 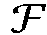 2 = 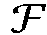 1 *o* 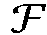 3,
- Une information est envoyée par l'entité émettrice, l'information est une information claire comprise dans un ensemble d'informations claires (ENS_P), chaque information claire de l'ensemble d'informations claires (ENS_P) pouvant être obtenue par l'ensemble des entités, l'ensemble d'informations claires (ENS_P) étant une union de trois sous-ensembles disjoints (ENS_L, ENS_M et ENS_N) d'informations claires avec :
o Chaque sous-ensemble (ENS_L, ENS_M et ENS_N) comprenant un nombre fini et connu d'informations claires,
o Un premier sous-ensemble (ENS_M) ayant un nombre d'informations claires inférieur ou égal au nombre d'informations claires comprises dans un second sous-ensemble (ENS_N) et une image par la troisième fonction de chiffrement 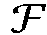 3 du premier sous-ensemble (ENS_M) étant incluse dans le second sous-ensemble (ENS_N),
o Chaque information claire du troisième sous-ensemble (ENS_L) étant une information pouvant être envoyée par l'entité émettrice ayant la première capacité de chiffrement,
o Chaque information claire du premier sous-ensemble (ENS_M) étant une information pouvant être envoyée par l'entité émettrice ayant la seconde capacité de chiffrement,
o Chaque information claire du second sous-ensemble (ENS_N) étant une information claire ne pouvant être envoyée par l'entité émettrice,
- L'entité émettrice est configurée pour exécuter les étapes suivantes :
o Chiffrer (110) l'information :
- Par la première fonction de chiffrement F1 lorsque l'entité émettrice a la première capacité de chiffrement, ou
- Par la seconde fonction de chiffrement 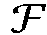 2 lorsque l'entité émettrice a la seconde capacité de chiffrement, et
o Envoyer (120) l'information chiffrée à l'entité réceptrice.
- L'entité réceptrice étant configurée pour exécuter les étapes suivantes :
o Recevoir (210), l'information chiffrée envoyée par l'entité émettrice,
o Déchiffrer (220), l'information chiffrée reçue (210), le déchiffrement comprenant :
- Obtenir (221) une première information en appliquant une première fonction de déchiffrement 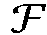 1⁻¹ à l'information chiffrée, la première fonction de déchiffrement 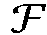 1⁻¹ étant la fonction inverse de la première fonction de chiffrement F1, et
- Lorsque la première information obtenue (221) est égale à une première information claire comprise dans le troisième sous-ensemble (ENS_L) d'informations claires, identifier la première information comme étant la première information claire envoyée par l'entité émettrice avec la première capacité de chiffrement,
- Lorsque la première information obtenue (222) est égale à une information claire comprise dans le second sous-ensemble (ENS_N) d'informations claires :
- Obtenir (222) une seconde information en appliquant à la première information obtenue (221), la troisième fonction de déchiffrement ( 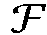 3⁻¹) qui est la fonction inverse de la troisième fonction de chiffrement 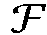 3, et
- Identifier (223) la seconde information obtenue (222) comme étant l'information claire envoyée par l'entité émettrice avec la seconde capacité de chiffrement, et
- Lorsque la première information obtenue (221) est égale à une information claire comprise dans le premier sous-ensemble (ENS_M), identifier (224) la première information obtenue (221) comme n'étant pas une information claire envoyée par l'entité émettrice.

10. Réseau de communication selon la revendication précédente dans lequel l'ensemble d'entités est un ensemble de terminaux et un ensemble d'au moins un point d'accès, chaque terminal de l'ensemble de terminaux se connectant au réseau de communication via un point d'accès compris dans l'ensemble d'au moins un point d'accès, dans lequel :
- L'information est envoyée par une entité émettrice à une entité réceptrice, avec :
o L'entité émettrice étant un premier terminal compris dans l'ensemble de terminaux ou un point d'accès compris dans l'ensemble d'au moins un point d'accès, et
o L'entité réceptrice étant le point d'accès ou un deuxième terminal compris dans l'ensemble de terminaux et différent du premier terminal lorsque l'entité émettrice est le premier terminal, ou
o L'entité réceptrice étant le premier terminal lorsque l'entité émettrice est le point d'accès.

11. Réseau de communication selon la revendication 9 dans lequel l'ensemble d'entités est un ensemble de terminaux mobiles communiquant en mode direct, dans lequel :
- L'information est envoyée par une entité émettrice à une entité réceptrice, avec :
o L'entité émettrice étant un premier terminal mobile compris dans l'ensemble de terminaux mobiles, et
o L'entité réceptrice étant un deuxième terminal mobile compris dans l'ensemble de terminaux mobiles et différent du premier terminal mobile.

12. Produit programme d'ordinateur comprenant des instructions qui conduisent le réseau selon l'une quelconque des revendications 9 à 11 à exécuter les étapes de la méthode selon l'une des revendications 1 à 8.

13. Support d'enregistrement lisible par ordinateur, sur lequel est enregistré le programme d'ordinateur selon la revendication 12.

## Patentansprüche

1. Verfahren (100) zur symmetrischen Verschlüsselung von Informationen, die innerhalb eines Kommunikationsnetzes mit einer Reihe von Entitäten übertragen werden, bei dem:
- Die Information von einer sendenden Entität an eine empfangende Entität gesendet wird und die sendende Entität und die empfangende Entität zu der Reihe von Entitäten gehören,
- Jede sendende Entität der Reihe von Entitäten eine vorbestimmte Verschlüsselungsfähigkeit besitzt aus:
o Einer ersten Verschlüsselungsfähigkeit, die eine Verschlüsselung auf der Grundlage einer ersten Verschlüsselungsfunktion 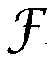 *1* ermöglicht, oder
o Einer zweiten Verschlüsselungsfähigkeit, die eine Verschlüsselung auf der Grundlage einer zweiten Verschlüsselungsfunktion 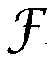 *2* ermöglicht, wobei die zweite Verschlüsselungsfunktion 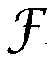 *2* aus der ersten Verschlüsselungsfunktion 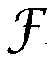 *1* und einer dritten Verschlüsselungsfunktion 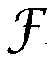 *3* mit 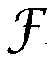 *2* = 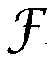 *1* o 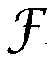 *3* erhalten wird,
- Die Information eine eindeutige Information ist, die in einer Reihe eindeutiger Informationen (ENS_P) enthalten ist, wobei jede eindeutige Information der Reihe eindeutiger Informationen (ENS_P) von allen Entitäten erhalten werden kann und die Reihe eindeutiger Informationen (ENS_P) eine Vereinigung von drei getrennten Teilmengen (ENS_L, ENS_M und ENS_N) eindeutiger Informationen ist, wobei:
o Jede Teilmenge (ENS_L, ENS_M und ENS_N) eine endliche und bekannte Anzahl von eindeutigen Informationen umfasst,
o Eine erste Teilmenge (ENS_M) mit einer Anzahl eindeutiger Informationen, die kleiner oder gleich der Anzahl eindeutiger Informationen ist, die in einer zweiten Teilmenge (ENS_N) enthalten sind, und ein Abbild durch die dritte Verschlüsselungsfunktion Y3 der ersten Teilmenge (ENS_M) in der zweiten Teilmenge (ENS_N) enthalten ist,
o Jede eindeutige Information der dritten Teilmenge (ENS_L) eine Information ist, die von der sendenden Entität mit der ersten Verschlüsselungsfähigkeit gesendet werden kann,
o Jede eindeutige Information der ersten Teilmenge (ENS_M) eine Information ist, die von der sendenden Entität mit der zweiten Verschlüsselungsfähigkeit gesendet werden kann,
o Jede eindeutige Information der zweiten Teilmenge (ENS_N) eine eindeutige Information ist, die von der sendenden Entität nicht gesendet werden kann,
- Das Verfahren (100) umfasst:
o Verschlüsseln (110), bei der sendenden Entität, der Informationen:
- durch die erste Verschlüsselungsfunktion 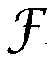 *1*, wenn die sendende Entität die erste Verschlüsselungsfähigkeit hat, oder
- durch die zweite Verschlüsselungsfunktion 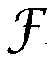 *2*, wenn die sendende Entität die zweite Verschlüsselungsfähigkeit hat, und
o Senden (120), durch die sendende Entität, der verschlüsselten Information an die empfangende Entität.

2. Verfahren (200) zum Entschlüsseln einer verschlüsselten Information nach dem vorhergehenden Anspruch, umfassend:
- Empfangen (210) der von der sendenden Entität gesendeten (120) verschlüsselten Information durch die empfangende Entität,
- Entschlüsseln (220) der empfangenen verschlüsselten Information (210) durch die empfangende Entität, wobei das Entschlüsseln Folgendes umfasst:
o Erhalten (221) einer ersten Information durch Anwenden einer ersten Entschlüsselungsfunktion 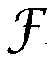 *1*⁻¹ auf die verschlüsselte Information, wobei die erste Entschlüsselungsfunktion 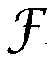 *1*⁻¹ die Umkehrfunktion der ersten Verschlüsselungsfunktion 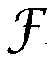 *1* ist, und
o wenn die erste erhaltene Information (221) gleich einer eindeutigen Information ist, die in der dritten Teilmenge (ENS_L) der eindeutigen Informationen enthalten ist, Identifizieren der ersten erhaltenen Information als eine eindeutige Information, die von der sendenden Entität mit der ersten Verschlüsselungsfähigkeit gesendet wurde,
o wenn die erste erhaltene Information gleich einer eindeutigen Information ist, die in der zweiten Teilmenge (ENS_N) von eindeutigen Informationen enthalten ist:
- Erhalten (222) einer zweiten Information durch Anwenden der dritten Entschlüsselungsfunktion Y3⁻¹ - die die Umkehrfunktion der dritten Verschlüsselungsfunktion 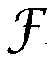 *3* ist - auf die erhaltene erste Information (221), und
- Identifizieren (223) der zweiten erhaltenen Information (222) als die eindeutige Information, die von der sendenden Entität mit der zweiten Verschlüsselungsfähigkeit gesendet wurde, und
o wenn die erste erhaltene Information (221) gleich einer eindeutigen Information ist, die in der ersten Teilmenge (ENS_M) enthalten ist, Identifizieren (224) der ersten erhaltenen Information (221) als eine nicht eindeutige Information, die von der sendenden Entität gesendet wurde.

3. Verfahren (100, 200) nach einem der vorhergehenden Ansprüche, bei dem die von der sendenden Entität gesendete Information eine Netzwerkadresse der sendenden Entität oder eine Netzwerkadresse der empfangenden Entität ist.

4. Verfahren (100, 200) nach einem der vorhergehenden Ansprüche, bei dem:
- Die sendende Entität mit der ersten Verschlüsselungsfähigkeit migriert, um die zweite Verschlüsselungsfähigkeit zu erwerben, und/oder
- Eine neue Entität im Kommunikationsnetzwerk hinzugefügt wird, wobei jede hinzugefügte Entität die erste Verschlüsselungsfähigkeit oder die zweite Verschlüsselungsfähigkeit hat, und/oder
- Die empfangende Entität mit der ersten Entschlüsselungsfähigkeit migriert, um die zweite Entschlüsselungsfähigkeit zu erwerben, und/oder
- Eine neue Entität im Kommunikationsnetzwerk hinzugefügt wird, wobei jede neu hinzugefügte Entität die erste Entschlüsselungsfähigkeit oder die zweite Entschlüsselungsfähigkeit hat.

5. Verfahren (100, 200) nach einem der vorhergehenden Ansprüche, bei dem das Kommunikationsnetzwerk vom Typ TETRA^{®} oder TETRAPOL^{®} ist.

6. Verfahren (100, 200) nach einem der vorhergehenden Ansprüche, bei dem die erste Verschlüsselungsfähigkeit des Kommunikationsnetzwerkes vom Typ MAC THEN ENCRYPT ist und die erste Entschlüsselungsfähigkeit des Kommunikationsnetzwerkes vom Typ DECRYPT THEN MAC ist.

7. Verfahren (100, 200) nach einem der vorhergehenden Ansprüche, bei dem die Reihe von Entitäten eine Reihe von Endgeräten und eine Reihe von mindestens einem Zugangspunkt ist, wobei jedes Endgerät der Reihe von Endgeräten sich über einen Zugangspunkt, der in der Reihe von mindestens einem Zugangspunkt enthalten ist, mit dem Kommunikationsnetzwerk verbindet, wobei:
- Die Information von einer sendenden Entität an eine empfangende Entität gesendet wird, wobei:
o Die sendende Entität ein erstes Endgerät ist, das in der Reihe von Endgeräten enthalten ist, oder ein Zugangspunkt, der in der Reihe von mindestens einem Zugangspunkt enthalten ist, und
o Die empfangende Entität der Zugangspunkt oder ein zweites Endgerät ist, das in der Reihe von Endgeräten enthalten ist und sich von dem ersten Endgerät unterscheidet, wenn die sendende Entität das erste Endgerät ist, oder
o Die empfangende Entität das erste Endgerät ist, wenn die sendende Entität der Zugangspunkt ist.

8. Verfahren (100, 200) nach einem der Ansprüche 1 bis 6, bei dem die Reihe von Entitäten eine Reihe von mobilen Endgeräten ist, die im Direktmodus kommunizieren, wobei:
- Die Information von einer sendenden Entität an eine empfangende Entität gesendet wird, wobei:
o Die sendende Entität ein erstes mobiles Endgerät ist, das in der Reihe von mobilen Endgeräten enthalten ist, und
o Die empfangende Entität ein zweites mobiles Endgerät ist, das in der Reihe von mobilen Endgeräten enthalten ist und sich von dem ersten Endgerät unterscheidet.

9. Kommunikationsnetzwerk, das eine Reihe von Entitäten umfasst, wobei:
- Die Information von einer sendenden Entität an eine empfangende Entität gesendet wird, wobei die sendende Entität und die empfangende Entität zur Reihe von Entitäten gehören,
- Jede Entität aus der Reihe von Entitäten eine vorbestimmte Verschlüsselungsfähigkeit hat aus:
o Einer ersten Verschlüsselungsfähigkeit, die eine Verschlüsselung auf der Grundlage einer ersten Verschlüsselungsfunktion Y1 ermöglicht, oder
o Einer zweiten Verschlüsselungsfähigkeit, die eine Verschlüsselung auf der Grundlage einer zweiten Verschlüsselungsfunktion Y2 ermöglicht, wobei die zweite Verschlüsselungsfunktion Y2 aus der ersten Verschlüsselungsfunktion Y1 und einer dritten Verschlüsselungsfunktion Y3 mit Y2 = o erhalten wird.
- Eine Information von der sendenden Entität gesendet wird, die Information eine eindeutige Information ist, die in einer Reihe eindeutiger Informationen (ENS_P) enthalten ist, wobei jede eindeutige Information der Reihe eindeutiger Informationen (ENS_P) von allen Entitäten erhalten werden kann, wobei die Reihe eindeutiger Informationen (ENS_P) eine Vereinigung von drei getrennten Teilmengen (ENS_L, ENS_M und ENS_N) eindeutiger Informationen ist, wobei:
o Jede Teilmenge (ENS_L, ENS_M und ENS_N) eine endliche und bekannte Anzahl von eindeutigen Informationen umfasst,
o Eine erste Teilmenge (ENS_M) mit einer Anzahl eindeutiger Informationen, die kleiner oder gleich der Anzahl eindeutiger Informationen ist, die in einer zweiten Teilmenge (ENS_N) enthalten sind, und wobei ein Abbild durch die dritte Verschlüsselungsfunktion Y3 der ersten Teilmenge (ENS_M) in der zweiten Teilmenge (ENS_N) enthalten ist,
o Jede eindeutige Information der dritten Teilmenge (ENS_L) eine Information ist, die von der sendenden Einheit mit der ersten Verschlüsselungsfähigkeit gesendet werden kann,
o Jede eindeutige Information der ersten Teilmenge (ENS_M) eine Information ist, die von der sendenden Entität mit der zweiten Verschlüsselungsfähigkeit gesendet werden kann,
o Jede eindeutige Information der zweiten Teilmenge (ENS_N) eine eindeutige Information ist, die von der sendenden Entität nicht gesendet werden kann,
- Die sendende Entität so konfiguriert ist, dass sie die folgenden Schritte ausführt:
o Verschlüsseln (110) der Informationen:
- Durch die erste Verschlüsselungsfunktion 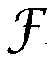 *1*, wenn die sendende Entität die erste Verschlüsselungsfähigkeit hat, oder
- Durch die zweite Verschlüsselungsfunktion 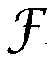 *2*, wenn die sendende Entität die zweite Verschlüsselungsfähigkeit hat, und
o Senden (120) der verschlüsselten Information an die empfangende Entität.
- Die empfangende Entität so konfiguriert ist, dass sie die folgenden Schritte ausführt:
o Empfangen (210) der verschlüsselten Information, die von der sendenden Entität gesendet wurde,
o Entschlüsseln (220) der empfangenen verschlüsselten Information (210), wobei das Entschlüsseln umfasst:
- Erhalten (221) einer ersten Information durch Anwenden einer ersten Entschlüsselungsfunktion 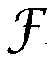 *1⁻¹* auf die verschlüsselte Information, wobei die erste Entschlüsselungsfunktion 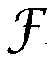 *1*⁻¹ die Umkehrfunktion der ersten Verschlüsselungsfunktion 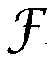 *1* ist, und
- wenn die erste erhaltene Information (221) gleich einer ersten eindeutigen Information ist, die in der dritten Teilmenge (ENS_L) der eindeutigen Information enthalten ist, Identifizieren der ersten Information als die erste eindeutige Information, die von der sendenden Entität mit der ersten Verschlüsselungsfähigkeit gesendet wurde,
- wenn die erste erhaltene Information (222) gleich einer eindeutigen Information ist, die in der zweiten Teilmenge (ENS_N) von eindeutigen Informationen enthalten ist:
- Erhalten (222) einer zweiten Information durch Anwenden der dritten Entschlüsselungsfunktion 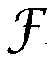 *3*⁻¹*,* die die Umkehrfunktion der dritten Verschlüsselungsfunktion 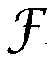 *3* ist, auf die erste erhaltene Information (221), und
- Identifizieren (223) der zweiten erhaltenen Information (222) als die eindeutige Information, die von der sendenden Entität mit der zweiten Verschlüsselungsfähigkeit gesendet wurde, und
- Wenn die erste erhaltene Information (221) gleich einer eindeutigen Information ist, die in der ersten Teilmenge (ENS_M) enthalten ist, Identifizieren (224) der ersten erhaltenen Information (221) als eine nicht eindeutige Information, die von der sendenden Entität gesendet wurde.

10. Kommunikationsnetzwerk nach dem vorhergehenden Anspruch, in dem die Reihe von Entitäten eine Reihe von Endgeräten und eine Reihe von mindestens einem Zugangspunkt ist, wobei jedes Endgerät der Reihe von Endgeräten sich über einen Zugangspunkt, der in der Reihe von mindestens einem Zugangspunkt enthalten ist, mit dem Kommunikationsnetzwerk verbindet, wobei:
- Die Information von einer sendenden Entität an eine empfangende Entität gesendet wird, wobei:
o Die sendende Entität ein erstes Endgerät ist, das in der Reihe von Endgeräten enthalten ist, oder ein Zugangspunkt, der in der Reihe von mindestens einem Zugangspunkt enthalten ist, und
o die empfangende Entität der Zugangspunkt oder ein zweites Endgerät ist, das in der Reihe von Endgeräten enthalten ist und sich von dem ersten Endgerät unterscheidet, wenn die sendende Entität das erste Endgerät ist, oder
o die empfangende Entität das erste Endgerät ist, wenn die sendende Entität der Zugangspunkt ist.

11. Kommunikationsnetzwerk nach Anspruch 9, in dem die Reihe von Entitäten eine Reihe von mobilen Endgeräten ist, die im Direktmodus kommunizieren, wobei:
- Die Information von einer sendenden Entität an eine empfangende Entität gesendet wird, wobei:
o Die sendende Entität ein erstes mobiles Endgerät ist, das in der Reihe von mobilen Endgeräten enthalten ist, und
o Die empfangende Entität ein zweites mobiles Endgerät ist, das in der Reihe von mobilen Endgeräten enthalten ist und sich von dem ersten mobilen Endgerät unterscheidet.

12. Computerprogrammprodukt, das Anweisungen enthält, die das Netzwerk nach einem der Ansprüche 9 bis 11 dazu veranlassen, die Schritte des Verfahrens nach einem der Ansprüche 1 bis 8 auszuführen.

13. Computerlesbares Speichermedium, auf dem das Computerprogramm nach Anspruch 12 gespeichert ist.

## Claims

1. A method (100) for symmetrically encrypting a piece of information transmitted within a communication network comprising a set of entities, wherein:
- the piece of information is sent by an emitting entity to a receiving entity, with the emitting entity and the receiving entity belonging to the set of entities,
- each emitting entity of the set of entities having a predetermined encryption capability from:
o a first encryption capability enabling encryption based on a first encryption function 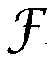 *1*, or
o a second encryption capability enabling encryption based on a second encryption function 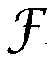 *2*, the second encryption function 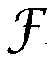 *2* being obtained from the first encryption function 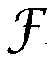 *1* and a third encryption function 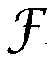 *3* with 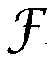 *2* = 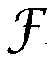 *1* o 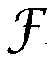 *3,*
- the piece of information is a clear piece of information included in a set of clear pieces of information (ENS_P), each clear piece of information of the set of clear pieces of information (ENS_P) being obtainable by the set of entities, the set of clear pieces of information (ENS_P) being a union of three disjoint subsets (ENS_L, ENS_M and ENS_N) of clear pieces of information with:
o each subset (ENS_L, ENS_M and ENS_N) comprising a known finite number of clear pieces of information,
o a first subset (ENS_M) having a number of clear pieces of information less than or equal to the number of clear pieces of information included in a second subset (ENS_N) and an image by the third encryption function Y3 of the first subset (ENS_M) is included in the second subset (ENS_N),
o each clear piece of information of the third subset (ENS_L) being a piece of information that can be sent by the emitting entity having the first encryption capability,
o each clear piece of information of the first subset (ENS_M) being a piece of information that can be sent by the emitting entity having the second encryption capability,
o each clear piece of information of the second set (ENS_N) being a clear piece of information that cannot be sent by the emitting entity,
- the method (100) comprising:
o encrypting (110), at the emitting entity, the piece of information:
- by the first encryption function 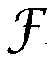 *1* when the emitting entity has the first encryption capability, or
- by the second encryption function 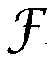 *2* when the emitting entity has the second encryption capability, and
o sending (120), by the emitting entity, the piece of information encrypted to the receiving entity.

2. The method (200) for decrypting an encrypted piece of information according to the preceding claim, comprising:
- receiving (210), by the receiving entity, the encrypted piece of information sent (120) by the emitting entity,
- decrypting (220), by the receiving entity, the encrypted piece of information received (210), decrypting comprising:
o obtaining (221) a first piece of information by applying a first decryption function 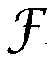 *1*⁻¹ to the encrypted piece of information, the first decryption function 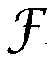 *1*⁻¹ being the inverse function of the first encryption function 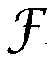 *1*, and
o when the first piece of information obtained (221) is equal to a clear piece of information included in the third subset (ENS_L) of clear pieces of information, identifying the first piece of information obtained as being a clear piece of information sent by the emitting entity with the first encryption capability,
o when the first piece of information obtained is equal to clear piece of information included in the second subset (ENS_N) of clear pieces of information:
- obtaining (222) a second piece of information by applying to the first piece of information obtained (221), the third decryption function 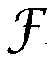 *3*⁻¹, which is the inverse function of the third encryption function 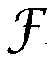 *3*, and
- identifying (223) the second piece of information obtained (222) as being the clear piece of information sent by the emitting entity with the second encryption capability, and
o when the first piece of information obtained (221) is equal to a clear piece of information included in the first subset (ENS_M), identifying (224) the first piece of information obtained (221) as not being a clear piece of information sent by the emitting entity.

3. The method (100, 200) according to any of the preceding claims, wherein the piece of information sent by the emitting entity is a network address of the emitting entity or a network address of the receiving entity.

4. The method (100, 200) according to any of the preceding claims, wherein:
- the emitting entity having the first encryption capability is migrated to acquire the second encryption capability, and/or
- a new entity is added in the communication network, each entity added having the first encryption capability or the second encryption capability, and/or
- the receiving entity having the first decryption capability is migrated to acquire the second decryption capability, and/or
- a new entity is added in the communication network, each new entity added having the first decryption capability or the second decryption capability.

5. The method (100, 200) according to any of the preceding claims, wherein the communication network is of the TETRA^{®} or TETRAPOL^{®} type.

6. The method (100, 200) according to any of the preceding claims wherein the first encryption capability of the communication network is of the MAC THEN ENCRYPT type and the first decryption capability of the communication network is of the DECRYPT THEN MAC type.

7. The method (100, 200) according to any of the preceding claims wherein the set of entities is a set of terminals and a set of at least one access point, each terminal of the set of terminals connecting to the communication network via an access point included in the set of at least one access point, wherein:
- the piece of information is sent by an emitting entity to a receiving entity, with:
o the emitting entity being a first terminal included in the set of terminals or an access point included in the set of at least one access point, and
o the receiving entity being the access point or a second terminal included in the set of terminals and different from the first terminal when the emitting entity is the first terminal, or
o the receiving entity being the first terminal when the emitting entity is the access point.

8. The method (100, 200) according to any of claims 1 to 6, wherein the set of entities is a set of mobile terminals communicating in direct mode, wherein:
- the piece of information is sent by an emitting entity to a receiving entity, with:
o the emitting entity being a first mobile terminal included in the set of mobile terminals, and
o the receiving entity being a second mobile terminal included in the set of mobile terminals and different from the first terminal.

9. A communication network comprising a set of entities, wherein:
- the piece of information is sent by an emitting entity to a receiving entity, with the emitting entity and the receiving entity belonging to the set of entities,
- each entity of the set of entities having a predetermined encryption capability from:
o a first encryption capability enabling encryption based on a first encryption function 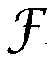 *1*, or
o a second encryption capability enabling encryption based on a second encryption function 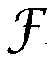 *2*, the second encryption function 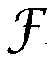 *2*being obtained from the first encryption function Y1 and a third encryption function 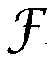 *3* with 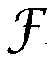 *2* = 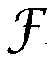 *1* o 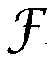 *3*
- a piece of information is sent by the emitting entity, the piece of information is a clear piece of information included in a set of clear pieces of information (ENS_P), each clear piece of information of the set of clear pieces of information (ENS_P) being obtainable by the set of entities, the set of clear pieces of information (ENS_P) being a union of three disjoint sub-sets (ENS_L, ENS_M and ENS_N) of clear pieces of information with:
o each subset (ENS_L, ENS_M and ENS_N) comprising a known finite number of clear pieces of information,
o a first subset (ENS_M) having a number of clear pieces of information less than or equal to the number of clear pieces of information included in a second subset (ENS_N) and an image by the third encryption function 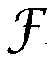 *3* of the first subset (ENS_M) being included in the second subset (ENS_N),
o each clear piece of information of the third subset (ENS_L) being a piece of information that can be sent by the emitting entity having the first encryption capability,
o each clear piece of information of the first subset (ENS_M) being a piece of information that can be sent by the emitting entity having the second encryption capability,
o each clear piece of information of the second subset (ENS_N) being a clear piece of information that cannot be sent by the emitting entity,
- the emitting entity is configured to perform the following steps:
o encrypting (110) the piece of information:
- by the first encryption function 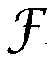 *1* when the emitting entity has the first encryption capability, or
- by the second encryption function 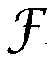 *2* when the emitting entity has the second encryption capability, and
o sending (120) the piece of information encrypted to the receiving entity.
- the receiving entity being configured to perform the following steps:
o receiving (210), the piece of information encrypted sent by the emitting entity,
o decrypting (220) the piece of information encrypted received (210), the decryption comprising:
- obtaining (221) a first piece of information by applying a first decryption function 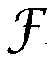 *1*⁻¹ to the encrypted piece of information, the first decryption function 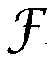 *1*⁻¹ being the inverse function of the first encryption function 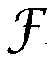 *1*, and
- when the first piece of information obtained (221) is equal to a first clear piece of information included in the third clear piece of information subset (ENS_L), identifying the first piece of information as being the first clear piece of information sent by the emitting entity with the first encryption capability,
- when the first piece of information obtained (222) is equal to a clear piece of information included in the second subset (ENS_N) of clear piece of information:
- obtaining (222) a second piece of information by applying to the first piece of information obtained (221) the third decryption function ( 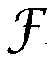 *3*⁻¹) which is the inverse function of the third encryption function 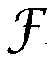 *3*, and
- identifying (223) the second piece of information obtained (222) as being the clear piece of information sent by the emitting entity with the second encryption capability, and
- when the first piece of information obtained (221) is equal to a clear piece of information included in the first subset (ENS_M), identifying (224) the first piece of information obtained (221) as not being a clear piece of information sent by the emitting entity.

10. The communication network according to the preceding claim, wherein the set of entities is a set of terminals and a set of at least one access point, each terminal of the set of terminals connecting to the communication network via an access point included in the set of at least one access point, wherein:
- the piece of information is sent by an emitting entity to a receiving entity, with:
o the emitting entity being a first terminal included in the set of terminals or an access point included in the set of at least one access point, and
o the receiving entity being the access point or a second terminal included in the set of terminals and different from the first terminal when the emitting entity is the first terminal, or
o the receiving entity being the first terminal when the emitting entity is the access point.

11. The communication network according to claim 9 wherein the set of entities is a set of mobile terminals communicating in direct mode, wherein:
- the piece of information is sent by an emitting entity to a receiving entity, with:
o the emitting entity being a first mobile terminal included in the set of mobile terminals, and
o the receiving entity being a second mobile terminal included in the set of mobile terminals and the first mobile terminal.

12. A computer program product comprising instructions that cause the network according to any of claims 9 to 11 to execute the steps of the method according to any of claims 1 to 8.

13. A computer-readable recording medium having the computer program according to claim 12 recorded thereon.
